# EUROPÄISCHE PATENTSCHRIFT

(11) **EP 3 426 920 B1**
(45) Veröffentlichungstag und Bekanntmachung des Hinweises auf die Patenterteilung: **16.12.2020**
(21) Anmeldenummer: 17700823.2
(22) Anmeldetag: 18.01.2017
(51) Int. Cl.: F04B 1/04, F04B 53/10, B60T 8/40

(54) **KOLBENPUMPE, INSBESONDERE ALS DRUCKERZEUGER IN EINER ELEKTRONISCH SCHLUPFREGELBAREN FAHRZEUGBREMSANLAGE**
PISTON PUMP, IN PARTICULAR AS A PRESSURE GENERATOR IN AN ELECTRONICALLY SLIP-CONTROLLABLE VEHICLE BRAKE SYSTEM
POMPE À PISTON UTILISÉE NOTAMMENT COMME GÉNÉRATEUR DE PRESSION DANS UN SYSTÈME DE FREINAGE DE VÉHICULE À RÉGULATION ÉLECTRONIQUE DU GLISSEMENT

(30) Priorität: 11.03.2016 DE 102016204002
(43) Veröffentlichungstag der Anmeldung: 16.01.2019
(73) Patentinhaber: Robert Bosch GmbH, 70442 Stuttgart (DE)
(72) Erfinder: GAERTNER, Oliver, 74232 Abstatt (DE); HENNIG, Oliver, 74182 Obersulm (DE)
(86) Internationale Anmeldenummer: PCT/EP2017/050977
(87) Internationale Veröffentlichungsnummer: WO 2017/153072

(56) Entgegenhaltungen:
- EP-A1- 1 701 032
- EP-B1- 1 185 794
- DE-A1- 19 924 774
- DE-A1-102008 041 383
- DE-A1-102013 210 041
- DE-A1-102015 206 242
- US-A1- 2008 292 473

## Beschreibung

### Stand der Technik

Die Erfindung betrifft eine Kolbenpumpe, insbesondere als Druckerzeuger in einer elektronisch schlupfregelbaren Fahrzeugbremsanlage, nach den Merkmalen des Oberbegriffs des Anspruchs 1.

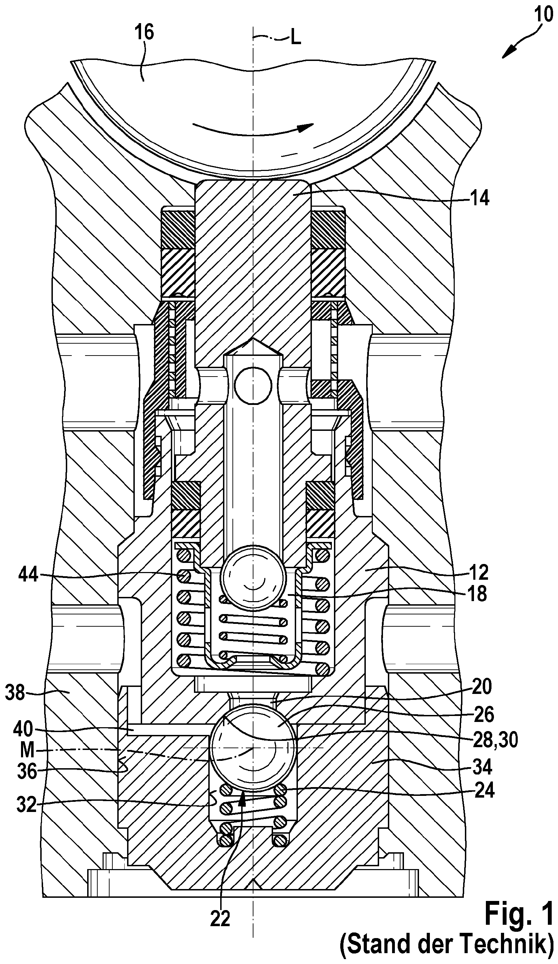

Eine aus der Entgegenhaltung US 2008/0292473 A1; Fig.1 bekannte und der vorliegenden Erfindung am Nächsten kommende Kolbenpumpe weist neben den anderen Merkmalen des Oberbegriffs des Anspruchs 1 ein Ventil mit einem Ventilsitz auf, der einen Ventilraum umschließt, in welchen ein Schließglied bei geschlossenem und bei geöffnetem Ventilsitz mindestens bis zu einem imaginären Mittelpunkt M eines Kalottenabschnitts dieses Schließglieds eintaucht. Ein Pumpenabströmkanal ist stromabwärts des imaginären Mittelpunkts M des Kalottenabschnitts angeordnet. In Durchströmungsrichtung des Ventils ist zwischen diesem imaginären Mittelpunkt des Kalottenabschnitts und dem Pumpenabströmkanal ferner eine Ringschulter ausgebildet, deren Abmessungen vom Durchmesser der Bohrung und vom Querschnitt des konischen Ventilsitzes bestimmt sind.

Bei diesem Stand der Technik bestimmt der Querschnitt dieses Ventilsitzes den Innendurchmesser und der Durchmesser der Bohrung den Außendurchmesser dieser Ringschulter. Weiterhin mündet der Pumpenabströmkanal in Durchströmungsrichtung des Ventils in axialem Abstand zur Ringschulter aus einem Inneren der Kolbenpumpe aus.

Eine weitere Kolbenpumpe ist aus der EP 1185 794 B1 bekannt und in Figur 1 vorliegender Unterlagen gezeigt. Diese Kolbenpumpe (10) weist einen Pumpenzylinder (12) auf, in dem ein Kolben (14) entlang einer Pumpenlängsachse L geführt aufgenommen ist. Der Kolben (14) ist durch einen rotierenden Exzenter oder Nocken (16) zu einer hin und hergehenden Hubbewegung entgegen der rückstellenden Kraft einer Kolbenfeder (44) antreibbar. Gemeinsam mit dem Pumpenzylinder (12) begrenzt der Kolben (14) einen Pumpenarbeitsraum (18), dessen Volumen in Abhängigkeit der Kolbenbewegungsrichtung zu- oder abnimmt. Ein Pumpenauslass (20) mündet aus dem Pumpenarbeitsraum (18) aus. Zur Steuerung eines Druckmitteldurchsatzes durch die Kolbenpumpe (10) ist u.a. ein Auslassventil (22) vorgesehen. Dieses steuert in Abhängigkeit des Drucks im Pumpenarbeitsraum (18) einen Öffnungsquerschnitt des Pumpenauslass (20) und weist hierfür ein von einem elastischen Rückstellmittel (24) beaufschlagtes Schließglied (26) auf. Letzteres wirkt mit einem kegelförmigen Ventilsitz (28) zusammen. Als Schließglied (26) des Auslassventils (22) wird beispielhaft eine Kugel verwendet.

Der Ventilsitz (28) ist an einem, den Pumpenzylinder (12) an einem seiner Enden verschließenden Boden angeordnet und ist auf der vom Pumpenarbeitsraum (18) abgewandten Seite dieses Bodens ausgebildet. Im dargestellten geschlossenen Zustand des Auslassventils (22) taucht die Kugel abschnittsweise soweit in einen vom Ventilsitz (28) umgebenen Ventilraum (30) ein, dass der außerhalb des Ventilraums (30) liegende Kugelabschnitt deutlich größer als der innerhalb des Ventilraums liegende Kugelabschnitt ist. Dementsprechend liegt ein imaginärer Kugelmittelpunkt (M) außerhalb bzw. in Durchströmungsrichtung des Auslassventils (22) betrachtet stromabwärts des Ventilraums (30).

Zu seiner axialen Führung während seiner Hubbewegung taucht das bekannte Schließglied (26) in eine Bohrung (32) ein, die in Gastalt einer Sacklochbohrung an einem Verschlußstopfen (34) ausgebildet ist. Der Verschlußstopfen (34) verschließt eine Aufnahmebohrung (36) für die Kolbenpumpe in einem Pumpengehäuse (38). Ein Durchmesser der Bohrung (32) ist geringfügig größer als der Durchmesser des Schließglieds (26) bemessen. Weiterhin dient die Bohrung (32) der Aufnahme des Rückstellmittels (24) des Schließglieds (26). Dieses Rückstellmittel (24) ist in Gestalt einer Spiralfeder ausgeführt und beaufschlagt das Schließglied (26) mit einer in Richtung des Ventilsitzes (28) wirkenden Federkraft.

Darüber hinaus ist ein Pumpenabströmkanal (40) an dem, dem Boden des Pumpenzylinders (12) zugewandten Ende des Verschlußstopfens (34) ausgebildet. Dieser Pumpenabströmkanal (40) wird von einer zum Pumpenzylinder (12) hin offenen Nut gebildet und verläuft quer zur Pumpenlängsachse L. Durch den Pumpenabströmkanal (40) strömt das von der Kolbenpumpe (10) durch das Auslassventil geförderte Druckmittel ab. Der Pumpenabströmkanal (40) befindet sich geometrisch auf einer Höhe zwischen dem Ventilsitz (28) und dem imaginären Mittelpunkt M des Schließglieds (26).

Diese geometrischen Verhältnisse haben erheblichen Einfluss auf die Funktionseigenschaften des beschriebenen Auslassventils (22). Sie bestimmen u.a. die Ventilkennlinie, das heißt den Druckmitteldurchsatz durch das Auslassventil (22) in Abhängigkeit einer das Schließglied (26) beaufschlagenden Druckdifferenz, den Öffnungsdruck des Auslassventils (22) und die Ventilgeräusche, welche beim Öffnen und Schließen des Auslassventils (22) entstehen.

Insbesondere hoher Druckmitteldurchsatz und niedriges Ventilgeräusch sind aufgrund stetig steigender Anforderungen an eine mögliche Druckaufbaudynamik und an den Komfort einer Fahrzeugbremsanlage von wesentlicher Bedeutung.
Es sei in diesem Zusammenhang auf Assistenzfunktionen wie z.B, automatisiertes Fahren, Notbremsfunktion oder dgl. hingewiesen, welche weitgehend sensorgesteuert und ohne bzw. mit begrenzter Fahrerbeteiligung von der Fahrzeugbremsanlage umgesetzt werden.

### Vorteile der Erfindung

Gegenüber dem nächstkommenden Stand der Technik weist eine Kolbenpumpe nach den Merkmalen des Anspruchs 1 den Vorteil auf, dass die Öffnungskräfte ihres Auslassventils reduziert, die Strömungsführung durch das Auslassventil verbessert und damit der Druckmitteldurchsatz des Auslassventils erhöht sowie die Ventilgeräusche verringert werden konnten. Diese Wirkungen ergeben sich durch eine erfindungsgemäße Optimierung der geometrischen Verhältnisse zwischen dem Durchmesser des Pumpenauslass, dem Sitzwinkel und der Sitztiefe des Ventilsitzes, den darauf abgestimmten Abmessungen des Schließkörpers sowie der Anordnung des Pumpenauslass. Die reduzierte Drosselwirkung des Auslassventils verringert den sich unter Betriebsbedingungen einstellenden Pumpeninnendruck, minimiert die Belastung der Pumpenbauteile und erhöht folglich die Pumpenzuverlässigkeit. Ferner ist zum Antrieb der Kolbenpumpe weniger Antriebsleistung notwendig, was sich wiederum kostensenkend auf die Komponenten des Pumpenantriebs, insbesondere auf einen Antriebsmotor und/oder dessen Steuerelektronik, auswirkt.

Weitere Vorteile oder vorteilhafte Weiterbildungen der Erfindung ergeben sich aus den Unteransprüchen und/oder aus der nachfolgenden Beschreibung.

### Zeichnung

Die Erfindung ist anhand eines Ausführungsbeispiels in der Zeichnung dargestellt und wird anhand nachfolgender Beschreibung detailliert erläutert.

Wie bereits erwähnt, zeigt Figur 1 eine aus dem Stand der Technik bekannte Kolbenpumpe im Längsschnitt.

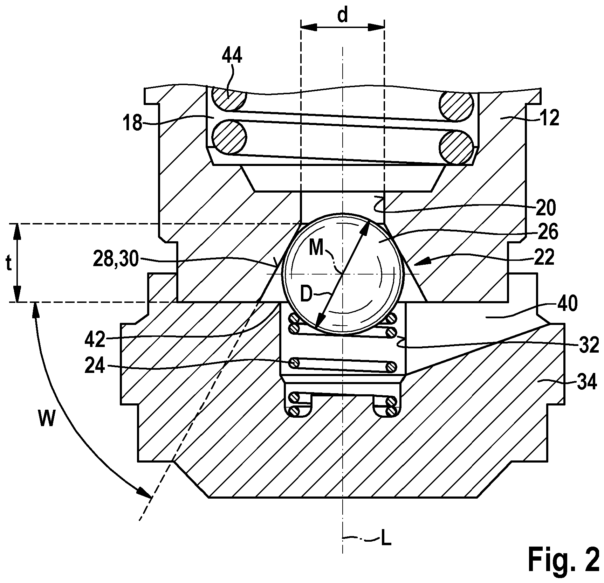

Figur 2 stellt, ebenfalls im Längsschnitt, einen Ausschnitt einer Kolbenpumpe dar, die mit einem erfindungsgemäß ausgebildeten Auslassventil bestückt ist.

Für die einander entsprechenden Bauelemente wurden in Figur 1 und 2 die selben Bezugszeichen verwendet.

### Beschreibung

Gemäß Figur 2 weist ein erfindungsgemäß ausgebildetes Auslassventil, vergleichbar zum bereits erläuterten Stand der Technik, zur Steuerung des Querschnitts eines Pumpenauslass 20 einer Kolbenpumpe 10 ebenfalls einen Ventilsitz 28, ein Schließglied 26 und ein das Schließglied 26 in Richtung des Ventilsitz 28 beaufschlagendes elastisches Rückstellmittel 24 auf. In der Figur 2 ist als Schließglied 26 eine Kugel eingesetzt, wobei die Verwendung einer Kugel für die Erfindung nicht zwangsweise erforderlich ist. Ebenso wäre z.B. ein Schließglied 26 denkbar, das z.B. einen zylindrischen Schaft und einen kalottenförmigen Abschnitt an wenigstens demjenigen Ende dieses Schaftes aufweist, das zur Steuerung des Pumpenauslass 20 mit dem Ventilsitz 28 zusammenwirkt. Ebenso ist gemäß Figur 2 als elastisches Rückstellmittel 24 zur Beaufschlagung des Schließglieds 26 eine Spiralfeder vorgesehen. Alternativ dazu könnten andere Federbauarten wie z.B. Kegel-, Teller oder Fachfedern eingesetzt werden, ebenso wie volumenelastische Bauteile aus Elastomer oder Elastomerschaum.

Das Rückstellmittel 24 des Schließglieds 26 ist in einer Bohrung 32 eines Verschußstopfens 34 angeordnet, welcher eine Aufnahmebohrung 36 eines in Figur 2 nicht gezeigte Pumpengehäuses zur Umgebung hin verschließt. Der Verschlußstopfen 34 liegt mit seinem einen Ende an einem Boden eines Pumpenzylinders 12 an. Der Pumpenzylinder 12 begrenzt zusammen mit einem in Figur 2 nicht erkennbaren Kolben einen Pumpenarbeitsraum 18. Im Pumpenarbeitsraum 18 ist eine den Kolben (nicht eingezeichnet) zurückstellende Kolbenfeder 44 angeordnet. Der in seinem Querschnitt vom Auslassventil 22 gesteuerte Pumpenauslass 20 befindet sich etwa im Zentrum des Bodens am Pumpenzylinder 12.

Figur 2 zeigt ferner einen Pumpenabströmkanal 40. Dieser mündet im Bereich der Wandung der Bohrung 32 des Verschlußstopfens 34 aus derselben aus und erstreckt sich im Wesentlichen quer einer Pumpenlängsachse L. Der Pumpenabströmkanal 40 hat an seiner Mündungsstelle in die Bohrung 32 seinen maximalen Kanalquerschnitt, das heißt, mit zunehmendem Abstand von der Mündungsstelle nimmt der Kanalquerschnitt des Pumpenabströmkanals 40 kontinuierlich ab.

Aus dem Pumpenarbeitsraum 18 mündet der Pumpenauslass 20 aus. Dieser hat einen konstanten Auslassdurchmesser d. In Strömungsrichtung eines Druckmittels durch das Auslassventil 22 schließt sich an diesen Pumpenauslass 20 der Ventilsitz 28 unmittelbar an. Letzterer ist kegelförmig ausgebildet, so dass sich dessen Durchströmungsquerschnitt in Strömungsrichtung des Druckmittels kontinuierlich von einem Minimalquerschnitt bis zu einem Maximalquerschnitt erweitert. Zwischen dem Minimalquerschnitt und dem Maximalquerschnitt umschließt der Ventilsitz 28 umfangseitig einen Ventilraum 30. Der Ventilsitz 28 hat einen Sitzwinkel w und erstreckt sich in Richtung der Pumpenlängsachse L vom Pumpenauslass 20 bis zu dem, an den Verschlußstopfen 34 angrenzenden strinseitigen Ende des Pumpenzylinders 12. Die kürzeste Entfernung zwischen Minal- und Maximalquerschnitt des Ventilsitzes 28 bezeichnet die Sitztiefe t. Das als Kugel ausgebildete Schließglied 26 hat den Schließglieddurchmesser D. Letzterer ist auf die Sitztiefe t, den Pumpenauslassdurchmesser d und den Sitzwinkel w derart abgestimmt, dass das Schließglied 26 soweit in den vom Ventilsitz 28 umschlossenen Ventilraum 30 eintaucht, dass sich ein imaginärer Mittelpunkt M des Schließglieds 26 innerhalb dieses Ventilraums 30 befindet. Die Lage des Mittelpunkts M des Schließglieds 26 ist in der Figur 2 anhand des Punkts veranschaulicht an dem sich eine Längsachse und eine Querachse durch das Schließglied 26 schneiden. Der Mittelpunkt M des Schließglieds 26 befindet sich innerhalb des Ventilraums 30 unabhängig davon, ob der Ventilsitz 28 durch das Schließglied 26 geschlossen oder geöffnet ist. Im geöffneten Zustand des Ventilsitzes 28 wird das Schließglied 26 von dem aus dem Pumpenauslass 20 abströmenden Druckmittel umspült und wird dadurch im Ventilraum 30 zentriert.

Hinsichtlich Druckmitteldurchsatz, Strömungswiderstand und Betriebsgeräusch besonders vorteilhafte Ergebnisse wurden mit einem Schließglieddurchmesser D zwischen 3,0 mm und 3,5 mm in Verbindung mit einem Sitzwinkel w zwischen 55° und 65°, einer Sitztiefe t mit einer Länge zwischen 75% und 95% und einem Pumpenauslass mit einem Auslassdurchmesser d im Bereich zwischen 65% und 80%, jeweils bezogen auf den Schließglieddurchmesser D erreicht.

Aufgrund dieser geometrischen Verhältnisse ist erfindungsmäß der Pumpenabströmkanal 40 nunmehr, in Durchströmungsrichtung des Auslassventils 22 betrachtet, stromabwärts des imaginären Mittelpunkts M des Schließglieds 26 angeordnet.

Weiterhin wirkt das erfindungsgemäße Auslassventil mit einer am Übergang vom Ventilsitz 28 zum Verschlußstopfen 34 ausgebildeten, vorzugsweise rechtwinklig ausgeführten Ringschulter 42 zusammen. Diese Ringschulter 42 liegt, in Durchströmungsrichtung des Auslassventils 22 betrachtet, ebenfalls stromabwärts des imaginären Mittelpunkts M des Schließglieds und hat einen vom Maximalquerschnitt des kegelförmigen Ventilsitzes 28 bestimmten Außendurchmesser, sowie einen Innendurchmesser, welcher durch den Außendurchmesser der Bohrung 32 des Verschlußstopfens 34 festgelegt ist. Erfindungsgemäß beträgt der Außendurchmesser der Ringschulter 42 ca. 120% bis 130% ihres Innendurchmessers.

Die Mündungsstelle des Pumpenabströmkanals in die Bohrung 32 des Verschlußstopfens 24 grenzt unmittelbar an die Ringschulter 42 an. Diese Bohrung 32 ist vorzugsweise als Sacklochbohrung ausgebildet und weist einen Durchmesser auf, der nur geringfügig größer als der Durchmesser D des Schließglieds 26 ist, obwohl bei der Erfindung das Schließglied 26 unter Betriebsbedingungen nicht in die Bohrung 32 eintaucht.
Die Führung bzw. Zentrierung des Schließglieds 26 erfolgt im Pumpenzylinder 12, insbesondere durch den daran ausgebildeten Ventilsitz 28 und das durch diesen Ventilsitz 28 hindurchströmende Druckmittel.

Selbstverständlich sind Änderungen und/oder Ergänzungen gegenüber dem beschriebenen Ausführungsbeispiel denkbar, ohne vom Gegenstand nach den Merkmalen des Anspruchs 1 abzuweichen. Diesbezüglich sei darauf hingewiesen, dass die Erfindung lediglich beispielhaft anhand des Auslassventils einer Kolbenpumpe beschrieben worden ist, grundsätzlich allerdings auch auf das Einlassventil übertragbar wäre.

## Patentansprüche

1. Kolbenpumpe,
insbesondere als Druckerzeuger in einer elektronisch schlupfregelbaren Fahrzeugbremsanlage,
mit einem Pumpenzylinder (12), in dem ein antreibbarer Kolben (14) verschiebbar aufgenommen ist,
mit einem vom Kolben (14) und vom Pumpenzylinder (12) begrenzten Pumpenarbeitsraum (18) und
mit einem, eine Versorgung des Pumpenarbeitsraums (18) mit Druckmittel steuernden Ventil (22), wobei das Ventil (22) einen kegelförmigen Ventilsitz (28) und ein Schließglied (26) mit einem, mit dem Ventilsitz (28) zusammenwirkenden Kalottenabschnitt aufweist,
wobei der Ventilsitz (28) einen Ventilraum (30) umschließt in welchen das Schließglied (26) bei geschlossenem und bei geöffnetem Ventilsitz (28) mindestens bis zu einem imaginären Mittelpunkt M des Kalottenabschnitts eintaucht, **dadurch gekennzeichnet,**
**dass** die Kolbenpumpe (10), betrachtet in Durchströmungsrichtung des Ventils (22), in einem Bereich zwischen dem imaginären Mittelpunkt M des Kalottenabschnitts des Schließglieds (26) und einem Pumpenabströmkanal (40) eine Ringschulter (42) ausbildet, deren Außendurchmesser vom Querschnitt des Ventilsitzes (28) und deren Innendurchmesser von einem Außendurchmesser einer Bohrung (32) zur Aufnahme eines Rückstellmittels (24) des Schließglieds (26) bestimmt ist und
**dass** der Pumpenabströmkanal (40) der Kolbenpumpe (10) stromabwärts des imaginären Mittelpunkts M des Kalottenabschnitts des Schließglieds (26) angeordnet ist, sich quer zu einer Pumpenlängsachse L erstreckt und unmittelbar angrenzend an die Ringschulter (42) aus einem Inneren der Kolbenpumpe (10) ausmündet.

2. Kolbenpumpe nach Anspruch 1, **dadurch gekennzeichnet,**
**dass** das Ventil (22) einen Querschnitt eines aus dem Pumpenarbeitsraum (18) ausmündenden Pumpenauslass (20) steuert.

3. Kolbenpumpe nach Anspruch 1 oder 2,
**dadurch gekennzeichnet,**
**dass** als Schließglied (26) eine Kugel mit einem Durchmesser (D) zwischen 3,0 mm und 3,5 mm vorgesehen ist und dass der keilförmige Ventilsitz (28) mit einem Sitzwinkel (w) zwischen 55° und 65° und einer Sitztiefe (t), deren Länge 75% bis 95% des Durchmessers (D) des Schließglieds (26) beträgt, ausgestattet ist.

4. Kolbenpumpe nach Anspruch 3,
**dadurch gekennzeichnet,**
**dass** der Pumpenauslass (20) einen Pumpenauslassdurchmesser (d) aufweist, der zwischen 65% und 80% des Durchmessers (D) des Schließglieds (26) bemisst.

5. Kolbenpumpe nach Anspruch 1,
**dadurch gekennzeichnet,**
**dass** der Pumpenabströmkanal (40) einen Kanalquerschnitt aufweist, der mit zunehmendem Abstand von der Mündungsstelle des Pumpenabströmkanals (40) in das Innere der Kolbenpumpe (10) kontinuierlich abnimmt.

## Claims

1. Piston pump,
in particular as a pressure generator in an electronically slip-controllable vehicle brake system,
with a pump cylinder (12) in which a drivable piston (14) is displaceably received,
with a pump working chamber (18) delimited by the piston (14) and by the pump cylinder (12), and with a valve (22) which controls a supply of pressure medium to the pump working chamber (18), wherein the valve (22) has a conical valve seat (28) and a closing member (26) having a domed portion which cooperates with the valve seat (28),
wherein the valve seat (28) surrounds a valve chamber (30) into which the closing member (26) plunges at least up to an imaginary centre point M of the domed portion when the valve seat (28) is closed and open, **characterized**
**in that** the piston pump (10), viewed in the flow direction of the valve (22), forms a ring shoulder (42) in a region between the imaginary centre point M of the domed portion of the closing member (26) and a pump outflow channel (40), wherein the outer diameter of said ring shoulder is determined by the cross section of the valve seat (28) and the inner diameter is determined by an outer diameter of a bore (32) for receiving a return means (24) of the closing member (26), and
**in that** the pump outflow channel (40) of the piston pump (10) is arranged downstream of the imaginary centre point M of the domed portion of the closing member (26), extends transversely with respect to a pump longitudinal axis L and opens from an interior of the piston pump (10) immediately adjacent to the ring shoulder (42).

2. Piston pump according to Claim 1,
**characterized**
**in that** the valve (22) controls a cross section of a pump outlet (20) opening from the pump working chamber (18).

3. Piston pump according to Claim 1 or 2,
**characterized**
**in that** a ball with a diameter (D) between 3.0 mm and 3.5 mm is provided as the closing member (26), and the wedge-shaped valve seat (28) has a seat angle (w) between 55° and 65° and a seat depth (t), the length of which amounts to 75% to 95% of the diameter (D) of the closing member (26).

4. Piston pump according to Claim 3,
**characterized**
**in that** the pump outlet (20) has a pump outlet diameter (d) which measures between 65% and 80% of the diameter (D) of the closing member (26).

5. Piston pump according to Claim 1,
**characterized**
**in that** the pump outflow channel (40) has a channel cross section which decreases continuously with an increasing distance from the point at which the pump outflow channel (40) opens into the interior of the piston pump (10).

## Revendications

1. Pompe à piston,
en particulier comme générateur de pression dans un système de freinage de véhicule à régulation électronique du glissement, comprenant
un cylindre de pompe (12) dans lequel un piston (14) pouvant être entraîné est reçu de manière coulissante,
une chambre de travail de pompe (18) délimitée par le piston (14) et le cylindre de pompe (12), et
une soupape (22) commandant une alimentation de la chambre de travail de pompe (18) en fluide sous pression, la soupape (22) présentant un siège de soupape conique (28) et un organe de fermeture (26) doté d'une partie de calotte coopérant avec le siège de soupape (28),
dans laquelle le siège de soupape (28) entoure la chambre de soupape (30) dans laquelle plonge l'organe de fermeture (26) lorsque le siège de soupape (28) est fermé et ouvert au moins jusqu'à un centre imaginaire M de la partie de calotte,
**caractérisée en ce que**
la pompe à piston (10), vue dans la direction de passage d'écoulement de la soupape (22), dans une zone entre le centre imaginaire M de la partie de calotte de l'organe de fermeture (26) et un canal d'évacuation de pompe (40), réalise un épaulement annulaire (42) dont le diamètre extérieur est déterminé par la section transversale du siège de soupape (28) et dont le diamètre intérieur est déterminé par un diamètre extérieur d'un alésage (32) destiné à recevoir un moyen de rappel (24) de l'organe de fermeture (26), et
**en ce que** le canal d'évacuation de pompe (40) de la pompe à piston (10) est disposé en aval du centre imaginaire M de la partie de calotte de l'organe de fermeture (26), s'étend transversalement à un axe longitudinal de pompe L et débouche de manière directement adjacente à l'épaulement annulaire (42) d'un espace intérieur de la pompe à piston (10).

2. Pompe à piston selon la revendication 1, **caractérisée en ce que** la soupape (22) règle une section transversale d'une sortie de pompe (20) débouchant de la chambre de travail de pompe (18).

3. Pompe à piston selon la revendication 1 ou 2, **caractérisée en ce que** comme organe de fermeture (26), une bille d'un diamètre (D) compris entre 3,0 mm et 3,5 mm est prévue, et **en ce que** le siège de soupape conique (28) est configuré avec un angle de siège (w) compris entre 55° et 65° et une profondeur de siège (t) dont la longueur est de 75 % à 95 % du diamètre (D) de l'organe de fermeture (26).

4. Pompe à piston selon la revendication 3, **caractérisée en ce que** la sortie de pompe (20) présente un diamètre de sortie de pompe (d) qui mesure entre 65 % et 80 % du diamètre (D) de l'organe de fermeture (26) .

5. Pompe à piston selon la revendication 1, **caractérisé en ce que** le canal d'évacuation de pompe (40) présente une section transversale de canal qui diminue en continu selon une distance croissante de l'embouchure du canal d'évacuation de pompe (40) sur l'espace intérieur de la pompe à piston (10).
